# EUROPEAN PATENT APPLICATION

(11) **EP 4 516 552 A2**
(43) Date of publication of application: **05.03.2025**
(21) Application number: 24197491.4
(22) Date of filing: 30.08.2024
(51) Int. Cl.: B60K 11/08

(54) **WORK MACHINE**

(30) Priority: 04.09.2023 JP 2023143152
(71) Applicant: Yanmar Holdings Co., Ltd., Osaka-shi, Osaka, 530-0013 (JP)
(72) Inventor: OTSUKA, Yosuke, Chikugo-shi (JP); HAYAMA, Yoshihito, Chikugo-shi (JP); AKIYAMA, Yukifumi, Chikugo-shi (JP)
(74) Representative: Dennemeyer & Associates S.A.

(57) **Abstract**

[Problem]

Provide is a work machine capable of efficiently guiding exhaust air from an engine room to the upper outside of a machine body through a vent hole.

[Solution]

An exhaust duct 80, which is disposed between a radiator 61 disposed in an engine room 11 and a right cover 14 having vent holes, includes an upper plate portion 81, a front-side plate portion 82, and a lower plate portion 83 so as to form a substantially cuboid frame extending the outer shape of the radiator 61 toward the right cover 14, and further includes a partition plate 91 dividing an exhaust flow passage of air in a duct into a lower first flow passage 93 and an upper second flow passage 94.

## Description

### TECHNICAL FIELD

The present invention relates to a work machine having a vent hole in an exterior cover.

### BACKGROUND ART

Conventionally, for example, a work machine such as an excavator includes a lower traveling body including a pair of left and right crawler-type traveling parts, an upper swiveling body connected to the lower traveling body in a swivelable manner, and a work device provided on a swivel frame of the upper swiveling body so as to be raisable and lowerable. The swivel frame of the upper swiveling body is provided with an operator's cab provided with an operator's seat and allowing an operator to operate the work device and the like, and an engine room in which various equipment including an engine are disposed; the engine room is covered with an exterior cover.

In such a work machine, in order to cool the engine, etc., a vent hole is provided in the exterior cover so that air in the engine room is discharged to the outside.

For example, Patent Document 1 proposes a work machine having an engine room housing an engine and a heat exchanger (radiator) with a cooling fan disposed therebetween and having an exhaust duct formed between the radiator and a vent hole provided in an exterior cover facing the radiator.

### PRIOR ART DOCUMENT

### PATENT DOCUMENT

Patent Document 1: Japanese Unexamined Patent Application Publication No. 2004-352089

### SUMMARY OF INVENTION

### TECHNICAL PROBLEM

In the work machine disclosed in Patent Document 1, in the vent hole having a configuration in which a grille is fitted into an opening in the exterior cover, planar fins horizontally provided in the front-rear direction in parallel with the upper and lower sides of the grille are obliquely arranged such that the outer side of the machine body is located on the upper side. That is, by adjusting the tilt angle of the planar fins of the grille, the air heated by passing through the radiator as a result of operation of a cooling fan is discharged obliquely upward from the vent hole. However, the exhaust gas cannot be efficiently guided upward only by changing the tilt angle of the fins of the grille. Therefore, there is a problem that, for example, the heated exhaust air discharged from the vent holes during excavation work at the side of a road directly blows on the shrubs and/or flowers growing along the road at positions equal to or lower than the height of the exhaust port, and causes withering due to the heat.

An object of the present invention, which has been made in view of the above-described problem, is to provide a work machine capable of efficiently guiding exhaust air from an engine room to the upper outside of a machine body through a vent hole.

### SOLUTION TO PROBLEM

A work machine according to the present invention includes an exterior cover having a vent hole communicating with an engine room, the work machine including an exhaust flow passage of air disposed between a heat exchanger disposed at a position opposing the vent hole and the exterior cover having the vent hole, and a partition plate dividing the exhaust flow passage into an upper portion and a lower portion and disposed in the exhaust flow passage, the partition plate tilting upward from inside of the engine room toward the vent hole.

A work machine according to another embodiment of the present invention is the above work machine, wherein the partition plate divides the exhaust flow passage into a first flow passage and a second flow passage, the first flow passage being disposed on a lower side of the partition plate and having a flow passage cross-sectional area that increases from the inside of the engine room toward the vent hole, the second flow passage being disposed on an upper side of the partition plate and having a flow passage cross-sectional area that decreases from the inside of the engine room toward the vent hole.

A work machine according to another embodiment of the present invention is the above work machine, wherein the flow passage cross-sectional area of the first flow passage on a side of the heat exchanger is larger than the flow passage cross-sectional area of the second flow passage on the side of the heat exchanger.

A work machine according to another embodiment of the present invention is the above work machine, wherein a flow of air discharged from the second flow passage is faster than a flow of air discharged from the first flow passage.

A work machine according to another embodiment of the present invention is the above work machine, wherein the air discharged from the first flow passage flows toward the flow of air discharged from the second flow passage.

A work machine according to another embodiment of the present invention is the above work machine, wherein a lower surface portion constituting a lower surface of the first flow passage is disposed below the partition plate with an upward tilt toward the vent hole.

A work machine according to another embodiment of the present invention is the above work machine, wherein a tilt angle of the partition plate is variable.

A work machine according to another embodiment of the present invention is the above work machine, wherein the partition plate is pivotably disposed on a support portion defining a sidewall of the exhaust flow passage, and the partition plate includes a fixing portion that fixes a tilt of the partition plate relative to the support portion.

### ADVANTAGEOUS EFFECTS OF INVENTION

According to the present invention, a configuration in which a vent hole is provided in an exterior cover enables exhaust air discharged from the vent hole to be efficiently guided to the upper outside of a machine body.

### BRIEF DESCRIPTION OF DRAWINGS

FIG. 1 is a left side view of an excavator according to one embodiment of the present invention.
FIG. 2 is a right side view of an upper swiveling body of the excavator according to the embodiment of the present invention.
FIG. 3 is a schematic plan view of equipment arrange in the upper swiveling body of the excavator according to one embodiment of the present invention.
FIG. 4 is a partial perspective view of a configuration around an exhaust duct disposed inside an exterior cover of the excavator according to one embodiment of the present invention.
FIG. 5 is an exploded perspective view of the exhaust duct of the excavator according to one embodiment of the present invention.
FIG. 6 is a schematic cross-sectional view of exhaust air flowing through the exhaust duct of the excavator according to one embodiment of the present invention.

### DESCRIPTION OF EMBODIMENTS

The present invention efficiently guides air from a vent hole to the upper outer side of a machine body by providing an inventive structure of an exhaust duct in an exterior cover having a vent hole. Embodiments of the present invention will be described below with reference to the accompanying drawings.

In the embodiments of the present invention, the description is to be made on an excavator (shovel), which is a swivel work vehicle, as an example of a work machine according to the present invention. However, the work machine according to the present invention is not limited to the excavator, and is widely applicable to other types of work machines such as a bulldozer, a crane work machine, a compact truck loader, a skid-steer loader, and a wheel loader.

A configuration of an excavator 1 according to the present embodiment will now be described with reference to the drawings. Unless a directional view is particularly specified, the terms "front side," "rear side," "right and left sides," "plan side" or "upper side," "bottom side" or "lower side" are used below with reference to positions of an operator seated on an operator's seat of the excavator 1.

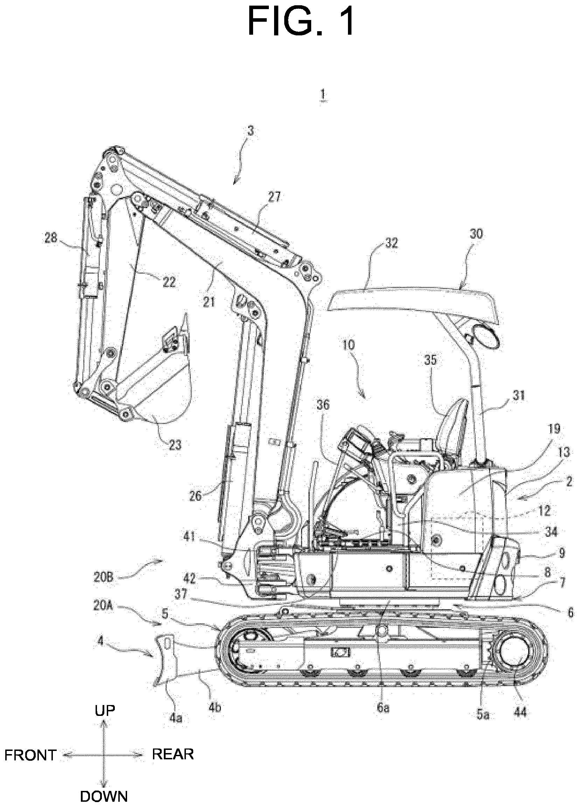

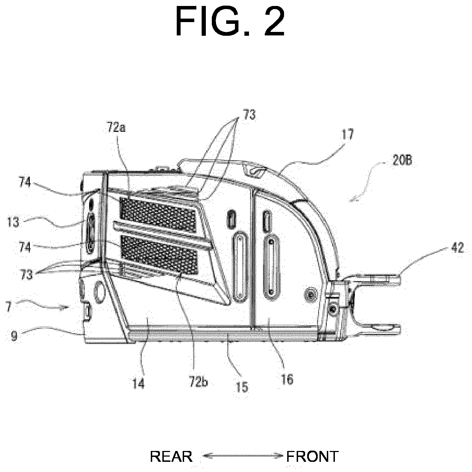

FIG. 1 is a left side view of the excavator 1 according to the present invention. FIG. 2 is a right side view of an upper swiveling body 20B. In FIG. 2, an excavating device 3 and an operator's cab 10 are not illustrated.

As illustrated in FIG. 1, the excavator 1 includes a traveling vehicle body (machine body) 2 that can be self-propelled, and an excavating device 3 and a soil removal device 4, each of which are work machines attached to the traveling vehicle body 2. The traveling vehicle body 2 includes a lower traveling body 20A including traveling parts 5 and an upper swiveling body 20B swivelly provided on the upper portion of the lower traveling body 20A. The soil removal device 4 is mounted on the lower traveling body 20A. The excavating device 3 is mounted on the upper swiveling body 20B.

The lower traveling body 20A includes right and left crawler-type traveling parts 5, 5 and a machine body frame 6 as a base disposed between the left and right traveling parts 5, 5.

Each of the traveling parts 5 has a configuration in which a belt is wound around a sprocket, an idler, and a plurality of rollers that are supported by the machine body frame 6. The traveling part 5 includes a drive sprocket 5a, which is a drive wheel, at its rear end.

The soil removal device 4 is attached to the front side of the machine body frame 6. The soil removal device 4 is provided so as to be vertically turnable relative to the lower traveling body 20A. The soil removal device 4 includes left and right arms 4b and a blade 4a, which is a soil removing plate provided at the distal ends of the left and right arms 4b.

The left and right arms 4b are provided to extend in the front-rear direction between the left and right traveling parts 5, 5. The proximal portions of the left and right arms 4b are supported by an arm support bracket provided at a front portion of the machine body frame 6 with the left-right direction as the turning axis direction. The right and left arms 4b are vertically turned by extension and retraction of a blade cylinder (not illustrated). That is, the blade 4a vertically turns via the left and right arms 4b as the blade cylinder extends and retracts.

The upper swiveling body 20B includes a swivel frame 7, which is mounted on the traveling part 5 and can be swiveled relative to the traveling part 5. The swivel frame 7 is connected to the machine body frame 6 via a swivel bearing 6a and can swivel in either the left or right direction around a swivel axis in an up-down direction relative to the machine body frame 6 by drive of a swivel motor (not illustrated).

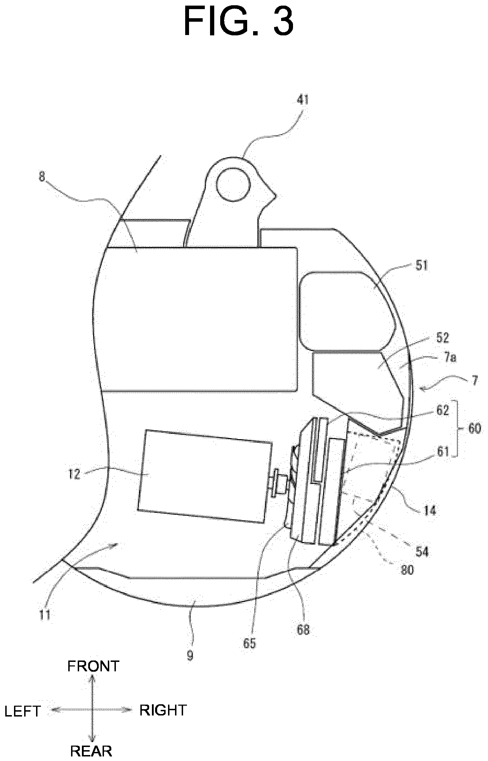

The swivel frame 7 has a roughly circular shape in a plan view, and serves as a base of the upper swiveling body 20B. A support bracket 41 is provided on the front side of a base plate 7a (see FIG. 3) of the swivel frame 7. A proximal end of the support bracket 41 is fixed to the base plate 7a by welding or the like. The support bracket 41 supports a swing bracket 42 that supports the excavating device 3 in a manner turnable in the front-rear direction.

The excavating device 3 includes a boom 21 that constitutes a proximal portion of the excavating device 3, an arm 22 that is connected to a tip end side of the boom 21, and a bucket 23 that is mounted to a tip end portion of the arm 22. Moreover, the excavating device 3 includes a boom cylinder 26 that causes the boom 21 to turn, an arm cylinder 27 that causes the arm 22 to turn, and a bucket cylinder 28 that causes the bucket 23 to turn.

The proximal end portion of the boom 21 is supported by the swing bracket 42. The swing bracket 42 is supported by the support bracket 41 so as to be swingable in the left-right direction. More specifically, the swing bracket 42 is supported by the support bracket 41 protruding from the swivel frame 7 via a coupling shaft having an up-down direction as a turning axis direction.

The swing bracket 42 supports the proximal end of the boom 21 in a turnable manner with the left-right direction as the turning axis direction, and supports the lower end of the boom cylinder 26. Moreover, the swing bracket 42 is provided with a portion to which a distal end of a rod of a swing cylinder (not illustrated) is connected. Therefore, when the swing bracket 42 turns around a coupling shaft by the operation of the swing cylinder, the excavating device 3 swings in the left-right direction.

The boom cylinder 26, the arm cylinder 27, the bucket cylinder 28, and the swing cylinder are all double-acting hydraulic cylinders operated by pressure oil discharged by a hydraulic pump (not illustrated). Each of the hydraulic cylinders are connected to a hydraulic pipe for supplying oil pressure and a hydraulic pipe for discharging oil pressure. In the excavating device 3, the bucket 23 is detachably attached as a work attachment and can be changed to another attachment such as a gripper (fork) or a crusher (breaker) to correspond to contents of work.

The swivel frame 7 is provided with the operator's cab 10 where an operator drives and operates the traveling part 5 and the work machine, and an engine room 11 that accommodates an engine 12, a battery 54, a fuel tank 51 for the engine and a hydraulic oil tank 52 for the hydraulic cylinders (see FIG. 3). The engine room 11 is provided on the swivel frame 7 from a right side of the operator's cab 10 to rear.

The swivel frame 7 has an exterior cover that forms the external shape of the upper swiveling body 20B. The exterior cover is a member that defines the engine room 11 by surrounding the equipment arranged on the base plate 7a of the swivel frame 7. The exterior cover is composed of several members of different shapes and sizes, depending on a shape of the swivel frame 7 and an arrangement of the configuration of the swivel frame 7. That is, the exterior cover includes a rear cover 13 covering the upper side of a counterweight 9 and the rear side of the engine room 11, a right cover 14 covering the right side surface of the engine room 11 on the right side of the swivel frame 7, a right lower cover 15 covering the right lower portion of the engine room 11, a right front cover 16 covering the right front of the engine room 11, and a left rear cover 19 covering the left rear of the engine room 11.

The right cover 14 is provided with a plurality of vent holes through which the engine room 11, which is a space surrounded by the exterior cover, communicates with the outside. Hot air in the engine room 11 is discharged by a cooling fan 65 provided in the engine room 11 (see FIG. 3) through the plurality of vent holes.

The counterweight 9 is provided to balance the weight with the excavating device 3. The counterweight 9 is attached to, for example, a stay (not illustrated) erected on the base plate 7a of the swivel frame 7 so as to cover the rear of the engine room 11 below the rear cover 13.

The operator's cab 10 is for driving and operating the traveling vehicle body 2 and the excavating device 3, and has a planar floor section 8. The floor section 8 is provided in a left portion of a front half portion on the swivel frame 7, and a left side of the swivel frame 7 serves as an entryway for an operator. The operator's cab 10 is provided with a canopy 30. The canopy 30 includes left and right column portions 31, 31 erected above the engine room 11 behind the operator's cab 10, and a canopy roof portion 32 supported by the left and right column portions 31, 31. The canopy roof portion 32 covers the operator's cab 10 from directly above.

In the operator's cab 10, an operator-seat support base 34 is provided on the rear side of the floor section 8, and an operator's seat 35 is provided on the operator-seat support base 34. Left and right traveling levers 36 that extend upward from the floor section 8 are provided in front of the operator's seat 35. A plurality of operation pedals 37 for work are arranged on the left and the right sides of the traveling levers 36 on the floor section 8. A work operation lever for operating a work machine, such as the excavating device 3, and an operation panel section that has various kinds of operation sections, such as a switch, are provided around the operator's seat 35 of the operator's cab 10.

In the excavator 1 having the above-described configuration, desired operation or work is performed when an operator seated in the operator's seat 35 appropriately operates the traveling levers 36 and/or the work operation lever. For example, by operating the traveling levers 36, the traveling part 5 either travels straight forward or backward traveling or turns right or left, and by operating the work operation lever, the excavating device 3 performs excavation work, or the soil removal device 4 performs soil removal work and/or leveling work.

A configuration related to cooling of the engine 12 and the hydraulic oil in the engine room 11 of the excavator 1 according to the present embodiment will now be described.

FIG. 3 is a schematic plan view of the arrangement of equipment in the upper swiveling body 20B. In FIG. 3, the left portion of the upper swiveling body 20B is cut away to illustrate the arrangement of the equipment in the engine room 11 from the right side to the rear side on the swivel frame 7.

The engine room 11, with the base plate 7a of the swivel frame 7 as a floor, is defined as a space where the right side is covered with the right cover 14 and the rear portion is covered with the rear cover 13 and the counterweight 9. The fuel tank 51, the hydraulic oil tank 52, the battery 54, and a heat exchange unit 60 are arranged at positions on the right side of the swivel frame 7 in the engine room 11. The engine 12 is positioned behind the center of the swivel frame 7. The engine 12 is, for example, a diesel engine.

The right cover 14 has an arc shape along the outer shape of the swivel frame 7 in a plan view. The right cover 14 has a substantially rectangular shape having a long side in the front-rear direction in a side view, and two openings 72a and 72b pass through the right cover 14 in the vertical direction. Each of the openings 72a and 72b is provided in an inclined angle so that the front side of the long side is slightly lowered. Each of the openings 72a and 72b is provided with a grille 74 formed of a lattice-like frame body that allows air to flow therethrough but does not allow foreign matter such as sand and stones to pass therethrough. Slits 73 are formed in the right cover 14 above the upper opening 72a and below the lower opening 72b. The two openings 72a and 72b to which the grilles 74 are attached and the slits 73 function as vent holes that allow the inside and the outside of the upper swiveling body 20B to communicate with each other.

The heat exchange unit 60 includes a radiator 61 and an oil cooler 62.

The radiator 61 has a rectangular plate shape. The radiator 61 is a heat exchanger for cooling engine cooling water and has a circulation passage through which the cooling water circulates and a heat dissipating part (fins).

The oil cooler 62 has a rectangular plate shape smaller than that of the radiator 61, and is disposed on the left side (inner side) of the radiator 61 so that the oil cooler 62 overlaps approximately half of the surface area of the radiator 61. The oil cooler 62 is a heat exchanger for cooling the hydraulic oil that operates the hydraulic cylinders, etc., and includes a circulation passage in which the hydraulic oil circulates and a heat dissipating part. The oil cooler 62 cools the hydraulic oil returning to the hydraulic oil tank 52 by dissipating heat of the returning oil from each hydraulic cylinder in the heat dissipating part.

The cooling fan 65 is disposed to face the heat exchange unit 60. The cooling fan 65 is, for example, an axial-flow fan in which a plurality of blades is attached to a cylindrical hub 65a. A fan shroud 68 is disposed around the cooling fan 65. The fan shroud 68 is formed to have a box shape so as to surround the outer periphery of the cooling fan 65.

Since a boss portion provided at a central portion of the hub 65a is connected to the power shaft of the engine 12, the cooling fan 65 operates in conjunction with the driving of the engine 12. That is, the cooling fan 65 starts rotating when the engine 12 is started, and stops rotating when the engine 12 is stopped. In other words, when the engine 12 is driven, the cooling fan 65 rotates to discharge the air in the engine room 11 to the outside through the vent holes formed in the right cover 14.

In the engine room 11, the engine 12, the cooling fan 65, the fan shroud 68, the oil cooler 62, and the radiator 61 are arranged in this order from the inside toward the right cover 14.

That is, the radiator 61 constituting the heat exchange unit 60 is disposed to face the right cover 14. The arrangement of the oil cooler 62 and the radiator 61 may be reversed.

An exhaust duct 80, which is disposed between the radiator 61 and the right cover 14, defines an exhaust flow passage through which exhaust air blown out through the fins of the radiator 61 by the operation of the cooling fan 65 reaches the openings 72a and 72b. In the present embodiment, the right cover 14 in which the openings 72a and 72b are formed substantially vertically has been described as an example, but the shape or the like of the openings serving as the vent holes is not limited thereto. For example, one opening larger than the openings 72a and 72b may be provided.

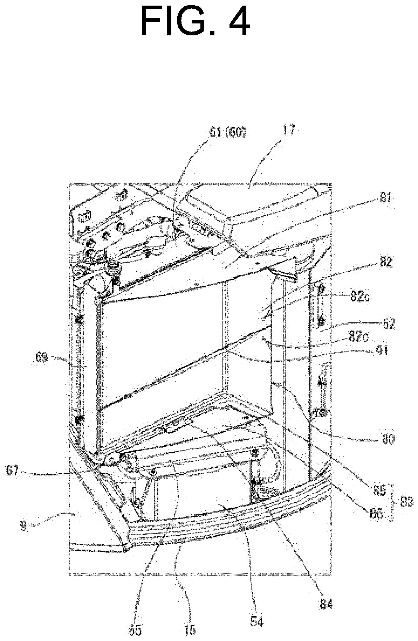

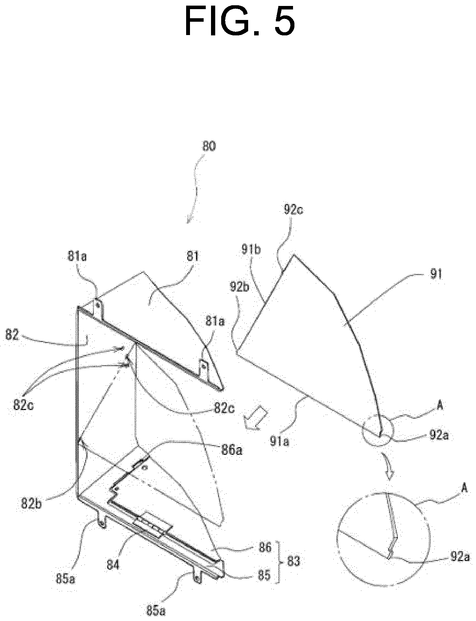

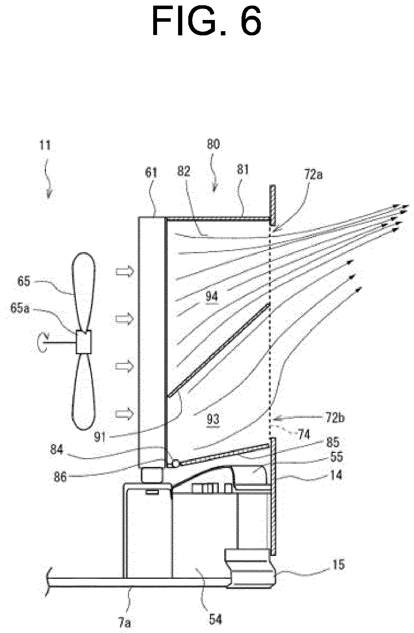

The exhaust duct 80 will be further described with reference to FIGS. 4 to 6. In FIG. 4, the exhaust duct 80 and its periphery from which the right cover 14 is removed is illustrated in an enlarged manner. In FIG. 5, the arrangement of the partition plate 91 in a state of being attached to the exhaust duct 80 is indicated a two-dot-chain line, the partition plate 91 in a state of being detached from the exhaust duct 80 is indicated by a solid line, and an enlarged view of a portion A of the partition plate 91 in the detached state is surrounded by a circle of a one-dot-chain line and is shown at the lower right of the page. In FIG. 6, the fan shroud 68, the oil cooler 62, and a portion that separates the openings 72a and 72b formed in the right cover 14 from each other are not illustrated, and the flow of air through the exhaust duct 80 is schematically illustrated by arrows.

As illustrated in FIG. 4, the exhaust duct 80 includes an upper plate portion 81, a front-side plate portion 82, and a lower plate portion 83 so as to form a substantially cuboid frame by extending the rectangular outer shape of the radiator 61 toward the right cover 14. The exhaust duct 80 of the present embodiment includes the partition plate 91, which separates the exhaust flow passage in the duct into upper and lower portions.

Based on the arrangement of the radiator 61 and the shape of the right cover 14, in the present embodiment, an exhaust flow passage is defined substantially by a duct structure including three plate members, i.e., the upper plate portion 81, the front-side plate portion 82, and the lower plate portion 83, and an arc-shaped inner wall of the right cover 14 is disposed facing the rear side of the front-side plate portion 82. In a case where the excavator 1 is a machine body capable of providing a wide space between the radiator 61 and the right cover 14 with respect to the size of the radiator 61, a rear-side plate portion may be disposed to face the rear side of the front-side plate portion 82 to define a substantially rectangular tubular duct structure.

The upper plate portion 81 has a substantially right-angled triangular shape in a plan view, and an oblique side portion of the upper plate portion 81 has a shape along the arc shape of the right cover 14. Attachment piece portions 81a and 81a that can be attached to support portions on the radiator 61 side are provided on the longer side of the two sides of the upper plate portion 81 disposed at a right angle, the longer side having a length corresponding to the length of the radiator 61 in the front-rear direction. The upper plate portion 81 is disposed so as to cover the space between the radiator 61 and the right cover 14 from the upper side with the plate surface being horizontal.

The front-side plate portion 82 is a portion formed integrally with the upper plate portion 81 by bending a metal sheet at a substantially right angle so as to have a plate surface orthogonal to the upper plate portion 81. The front-side plate portion 82 is suspended downward from the upper plate portion 81, and thus also functions as a partition wall that separates the space in the engine room 11 in which the hydraulic oil tank 52 and the like are disposed from the inside of the exhaust duct 80.

The lower plate portion 83 is disposed at a position opposed to the upper plate portion 81. The lower plate portion 83 has a substantially right-angled triangular shape similar to that of the upper plate portion 81, and includes a support portion 85 and a movable plate portion 86, which is connected to the support portion 85 via a hinge 84 so as to be turnable relative to the support portion 85. The support portion 85 extends rearward from the lower end of the front-side plate portion 82. The support portion 85 is a plate body having a substantial L-shape in a plan view, and is connected to the front-side plate portion 82 with the bottom of the L-shape as the connection side with the front-side plate portion 82. The movable plate portion 86 has a substantially right-angled triangular shape of which two sides are surrounded by the L-shape of the support portion 85. The hypotenuse of the substantially right-angled triangular movable plate portion 86 also serves as the hypotenuse portion of the substantially right triangular lower plate portion 83 together with the end edge of the support portion 85. In the movable plate portion 86, an end edge on the front-side plate portion 82 side is provided with an engagement piece portion 86a that engages with an upper surface of the support portion 85. As a result, the movable plate portion 86 is prohibited from turning downward from the support portion 85.

Of the two sides of the support portion 85 of the lower plate portion 83 that sandwich the L-shaped corner, the long side 83a along the radiator 61 side is provided with attachment piece portions 85a and 85a for attachment to a support portion on the lower end side of the radiator 61.

The attachment piece portions 85a and 85a of the lower plate portion 83 and the attachment piece portions 81a and 81a of the upper plate portion 81 are attached to the support portion on the radiator 61 side by screw fastening, whereby the exhaust duct 80 is disposed between the radiator 61 and the right cover 14.

A battery 54 whose upper portion is covered with a battery cover 55 composed of an insulating material, such as rubber, is disposed in a space below the lower plate portion 83. At the time of maintenance such as replacement of the battery 54, the upper portion of the battery 54 can be opened by turning the lower plate portion 83 upward around the hinge shaft. The lower plate portion 83 composed of the support portion 85 and the movable plate portion 86 is disposed so as to tilt upward in a direction toward the vent holes.

In the present embodiment, the upper plate portion 81 is disposed such that the plate surface is horizontal, but the upper plate portion 81 may also be provided such that the direction toward the vent holes tilts upward similarly to the lower plate portion 83.

As illustrated in FIG. 5, the partition plate 91 has a substantially right-angled triangular shape similar to that of the upper plate portion 81, and a long side 91a of two sides at a right angle is disposed along the radiator 61. An engaging projection 92a is provided near the rear end of the long side 91a, and an engaging projection 92b is provided near the corner between the long side 91a and a short side 91b. The engaging projection 92b is inserted into a hole 82b formed in the front-side plate 82 as an engagement receiving portion provided in the front-side plate portion 82, and the engaging projection 92a is engaged with an engagement receiving portion (not illustrated), such as a recess or a hole, provided in a support plate 69 that supports the rear end face of the radiator 61, whereby the partition plate 91 is provided in a turnable manner in the exhaust duct 80 about a turning axis, which is a straight line connecting the engaging projections 92a and 92b of the partition plate 91. That is, the front-side plate portion 82 and the support plate 69 of the radiator 61 serve as a support portion that forms a sidewall of the exhaust flow passage. The support plate 69 is provided so as to entirely cover the rear surface portion of the radiator 61.

In the front-side plate portion 82, the hole 82b is formed at a position at a height that is approximately one third of the height of the front-side plate portion 82. In the present embodiment, as illustrated in FIG. 4, the engagement receiving portion that engages the engaging projection 92a with the support plate 69 is provided at a position at the same height as the hole 82b, but by providing the engagement receiving portion on the support plate 69 side at a height different from that of the hole 82b in the front-side plate portion 82, for example, the partition plate 91 may be provided so as to be tilted front-low and rear-high in the front-rear direction.

An engaging projection 92c that fits into a hole 82c formed in the front-side plate portion 82 is provided in the vicinity of an end portion of the short side 91b of the partition plate 91 on a side opposite to the engaging projection 92b. The hole 82c is formed at a position higher than the hole 82b. Therefore, by fitting the engaging projection 92b into the hole 82b and fitting the engaging projection 92c into the hole 82c, the partition plate 91 is fixed in a position in the exhaust duct 80 in a state in which the partition plate 91 tilts upward in a direction toward the vent holes. That is, the engaging projection 92c of the partition plate 91 functions as a fixing portion that fixes the tilt angle and the position of the partition plate 91 relative to the corresponding hole 82c. In other words, the engaging projection 92c serves as a locking portion for locking and fixing the partition plate 91, which is supported by the engaging projections 92a and 92b so as to be able to turn with the substantially front-rear direction being the turning axis direction, to the front-side plate portion 82.

In the front-side plate portion 82, a plurality of the holes 82c are provided at positions along an arc-shaped trajectory which is a movement trajectory of the engaging projection 92c when the partition plate 91 is turned. In the present embodiment, three holes 82c are formed and arranged in predetermined intervals (for example, at intervals of 5 degrees along the circumference around the turning axis of the partition plate 91). With such a configuration, it is possible to easily change the tilt angle of the partition plate 91 in the direction from the radiator 61 toward the vent holes by changing the height of the position at which the engaging projection 92c is fitted. The tilt angle of the partition plate 91 is set to be larger than the tilt angle of the lower plate portion 83.

By providing the partition plate 91 in the exhaust duct 80, as illustrated in FIG. 6, the air exhaust flow passage is divided into a first flow passage 93 below the partition plate 91 and a second flow passage 94 above the partition plate 91. The lower surface of the first flow passage 93 is formed by the lower plate portion 83, and the upper surface of the first flow passage 93 is formed by the partition plate 91. A lower surface of the second flow passage 94 is defined by the partition plate 91, and an upper surface of the second flow passage 94 is defined by the upper plate portion 81.

Since the partition plate 91 is provided so as to tilt upward in the direction toward the vent holes, the flow passage cross-sectional area of the first flow passage 93 gradually increases toward the vent holes, and the flow passage cross-sectional area of the second flow passage 94 gradually decreases toward the vent holes.

In the present embodiment, the engagement height of the engaging projections 92a and 92b of the partition plate 91 is set such that the opening area on the radiator 61 side of the second flow passage 94 is larger than that of the first flow passage 93.

In the configuration provided with the exhaust duct 80 as described above, a substantially rectangular outlet-side opening portion is formed as an opening portion on the outlet side of the exhaust air by the outer edge portions of the upper plate portion 81, the front-side plate portion 82, the lower plate portion 83, and the support plate 69. The outlet-side opening portion is closed by the right cover 14 having vent holes. A seal member (not illustrated) composed of rubber or the like is disposed along an opening edge portion of the outlet-side opening portion, and the right cover 14 is brought into close contact with the outlet-side opening portion via the seal member.

In the excavator 1 including the exhaust duct 80 having the above-described configuration, air is blown toward the radiator 61 by the rotation of the cooling fan 65, as indicated by white arrows in FIG. 6. The air that has passed between the fins of the radiator 61 absorbs heat of the radiator 61, becomes a flow of heated air, passes through the inside of the exhaust duct 80, and is discharged to the outside of the machine body mainly from the upper and lower openings 72a and 72b fitted with the grille 74.

In the exhaust duct 80, in the second flow passage 94 on the upper side of the partition plate 91, the cross-sectional area of the flow passage opened on the right cover 14 side serving as the air outlet is smaller than the cross-sectional area of the flow passage opened on the radiator 61 side serving as the air inlet. Therefore, the flow velocity of the exhaust air increases toward the outlet. The amount of air moving in the exhaust duct 80 per unit time (air volume Q (m³/min)) is obtained from Q = V × A × 60, where V is the velocity of air passing through the duct (m/s), and A is the flow passage cross-sectional area A (m²) of the duct. Therefore, when the amount of air moved by the cooling fan 65 rotating at a predetermined rotational speed is constant and half of the amount of air passes through each of the first flow passage 93 and the second flow passage 94, the air discharged to the outside of the machine body from the second flow passage 94 having a smaller flow passage cross-sectional area on the vent side has a higher wind speed, and the air discharged to the outside of the machine body from the first flow passage 93 having a larger flow passage cross-sectional area on the vent holes side has a lower wind speed. That is, due to the tilted arrangement of the partition plate 91, the flow of the air discharged from the second flow passage 94 becomes faster than the flow of the air discharged from the first flow passage 93.

Since the flow of the air discharged from the second flow passage 94 becomes faster than the flow of the air discharged from the first flow passage 93, the air discharged from the first flow passage 93 is drawn by the flow velocity of the air discharged from the second flow passage and flows upward so as to join the flow of the air from the second flow passage 94, as illustrated in FIG. 6. That is, a flow of the air discharged from the first flow passage 93 is formed toward the flow of the air discharged from the second flow passage 94. Therefore, the exhaust air discharged to the outside of the machine body can be efficiently guided upward.

Due to the tilted arrangement of the partition plate 91 in the exhaust duct 80, the exhaust air discharged from the machine body is guided not horizontally but upward, so that the heated exhaust air does not directly hit the shrubs and/or flowers growing along the road positions equal to or lower than the height of the opening 72b on the lower side of the right cover 14 during the work by the excavator 1, and these plants can be prevented from being withered by heat.

In the present embodiment, the plate surface of the front-side plate portion 82 is disposed so as to be substantially orthogonal to the air blowing surface of the radiator 61, but the front-side plate portion 82 may be disposed so as to be tilted at an acute angle with respect to the air blowing surface of the radiator 61 in a plan view in order to blow the exhaust air further rearward of the machine body. In such a case, the shape of the partition plate 91 is also changed in accordance with the tilt of the front-side plate portion 82 of the exhaust duct 80.

It can be said that the excavator 1 of the present embodiment, with the configuration described above, has the following configuration. That is, the excavator 1 is a work machine in which the vent holes (openings 72a and 72b, slits 73) communicating with the engine room 11 are provided in the exterior cover (right cover 14), and the partition plate 91 that divides the exhaust flow passage (exhaust duct 80) in upper and lower portion is disposed between the exterior cover (right cover 14) provided with the vent holes and the heat exchangers (heat exchange unit 60, radiator 61, oil cooler 62) disposed at positions opposed to the vent holes (openings 72a and 72b, slits 73) with the partition plate 91 tilted upward from the inside of the engine room 11 toward the vent holes.

According to the excavator 1 according to the present embodiment, since the partition plate 91 is disposed to tilt upward from the inside of the engine room 11 toward the vent holes, the exhaust flow passage of the air from the engine room 11 is vertically separated, and the exhaust air from the lower flow passage is merged with the exhaust air from the upper flow passage, so that the exhaust air can be guided upward. In this way, by guiding the flow of air upward from the engine room toward the vent holes, the air discharged from the vent holes to the outside of the machine body can be discharged as an upward flow from the vent holes, and the exhaust air of the engine, etc., discharged from the engine room is prevented from being blown against the planting or the like around the excavator 1 during the excavation. It is also possible to prevent the exhaust air from being blown against workers, pedestrians, or the like passing by the side of the excavator 1.

In the excavator 1, the partition plate 91 separates the exhaust flow passage (exhaust duct 80) into the first flow passage 93, which is on the lower side of the partition plate 91 and has a flow passage cross-sectional area that gradually increases from the radiator 61 side toward the vent holes, and the second flow passage 94, which is on the upper side of the partition plate 91 and has a flow passage cross-sectional area that gradually decreases from the radiator 61 side toward the vent holes. In other words, the partition plate 91 is arranged so that the flow of the air discharged from the second flow passage 94 above the partition plate 91 is faster than the flow of the air discharged from the first flow passage 93 below the partition plate 91. In the excavator 1, the flow of the air discharged from the first flow passage 93 is formed toward the flow of the air discharged from the second flow passage 94.

According to the excavator 1 having such a configuration, in the second flow passage 94 formed in the exhaust flow passage (exhaust duct 80), the outlet on the vent holes side is narrower than the inlet of the second flow passage 94 on the engine room 11 side with respect to the flow of air from the engine room 11 toward the vent holes due to the arrangement of the partition plate 91. Thus, the flow velocity of the exhaust air is higher on the air outlet side. That is, the flow of air is faster in the second flow passage 94 in which the flow passage cross-sectional area is gradually narrowed toward the vent holes than in the first flow passage 93 in which the flow passage cross-sectional area is gradually widened toward the vent holes. Therefore, the flow of the air discharged from the first flow passage 93, which has a lower flow velocity than the flow of the air discharged from the second flow passage 94, is attracted to the flow of the air discharged from the second flow passage 94. In this way, since the exhaust air of the first flow passage 93 on the lower side is easily merged with the exhaust air from the second flow passage 94 on the upper side, the exhaust air can be more efficiently guided upward.

In the excavator 1, the flow passage cross-sectional area of the second flow passage 94 on the heat exchangers side is larger than the flow passage cross-sectional area of the first flow passage 93 on the heat exchangers (heat exchange unit 60, radiator 61, oil cooler 62) side.

According to the excavator 1 having such a configuration, the amount of air discharged from the second flow passage 94 on the upper side of the partition plate 91 is larger than the amount of air discharged from the first flow passage 93. That is, the amount of exhaust air from the first flow passage 93 can be reduced. Since the inlet of the air to the second flow passage 94 is larger, the speed of the exhaust air discharged from the second flow passage 94 is faster. Therefore, since the exhaust air of the first flow passage 93 on the lower side is easily merged with the exhaust air from the second flow passage 94 on the upper side, the exhaust air can be more efficiently guided upward.

In the excavator 1, the lower plate portion 83 as a lower surface portion defining the lower surface of the first flow passage 93 is disposed below the partition plate 91 so as to tilt upward toward the vent holes.

According to the excavator 1 having such a configuration, the flow of the air discharged from the first flow passage 93 can be guided further upward by the lower plate portion 83. In the present embodiment, since the battery 54 is disposed below the exhaust flow passage (exhaust duct 80), for example, the battery cover 55 that covers the upper surface of the battery 54 may be changed in shape to replace the lower plate portion 83.

In the excavator 1, the partition plate 91 is provided so that the tilt angle can be changed.

According to the excavator 1 having such a configuration, the tilt angle of the partition plate 91 can be appropriately changed in accordance with the specification of the excavator 1 and the arrangement of the equipment on the swivel frame 7. Accordingly, it is possible to easily adjust the discharge direction of the exhaust air from each exhaust flow passage on the upper and lower sides of the partition plate 91 in accordance with the specification (size) of the excavator 1.

With the configuration for changing the tilt angle of the partition plate 91 according to the present embodiment, the tilt angle of the partition plate 91 can be changed in three stages, up, middle, and down, by the configuration in which three holes 82c are provided as the plurality of hole for angle adjustment. The number of the holes 82c is not limited. Among the holes 82c, it is preferred that the hole 82c that is not used for supporting the partition plate 91 (a hole 82c in an open state), for example, be closed by using a clip, such as a tree clip, a screw, or the like as a blocking member. By closing the hole 82c with the blocking member, the air flowing into the exhaust duct 80 by the rotating cooling fan 65 can be suppressed from leaking to the inside of the machine body through the hole 82c, and the cooling action by the cooling fan 65 can be maintained.

The partition plate 91 is pivotally provided on the support portions (front-side plate portion 82, support plate 69) defining the sidewalls of the exhaust flow passage and has a fixing portion (engaging projection 92c) for fixing the tilt of the partition plate 91 relative to the support portions.

According to the excavator 1 having such a configuration, it is possible to easily adjust the direction of the exhaust air by changing the tilt angle of the partition plate 91 and to easily fix the partition plate 91. The partition plate 91 can be easily installed even in the small-sized excavator 1.

The description of the above-described embodiment merely constitutes one example of the present invention, and the work machine according to the present invention is not limited to the above-described embodiment. Accordingly, it is needless to say that various modifications can be made even to those other than the above-described embodiment according to the design and the like within the scope that does not depart from the technical idea of the present invention. The effects described in the present disclosure are merely illustrative and are not limited, and other effects may also be exerted.

The present invention may take the following modes.
(1) A work machine including an exterior cover having a vent hole communicating with an engine room, the work machine comprising:
   an exhaust flow passage of air disposed between a heat exchanger disposed at a position opposing the vent hole and the exterior cover having the vent hole, and
   a partition plate dividing the exhaust flow passage into an upper portion and a lower portion and disposed in the exhaust flow passage, the partition plate tilting upward from inside of the engine room toward the vent hole.
(2) The work machine according to mode (1), wherein the partition plate divides the exhaust flow passage into a first flow passage and a second flow passage, the first flow passage being disposed on a lower side of the partition plate and having a flow passage cross-sectional area that gradually increases from the inside of the engine room toward the vent hole, the second flow passage being disposed on an upper side of the partition plate and having a flow passage cross-sectional area that gradually decreases from the inside of the engine room toward the vent hole.
(3) The work machine according to mode (2), wherein the flow passage cross-sectional area of the first flow passage on a side of the heat exchanger is larger than the flow passage cross-sectional area of the second flow passage on the side of the heat exchanger.
(4) The work machine according to mode (2) or (3), wherein a flow of air discharged from the second flow passage is faster than a flow of air discharged from the first flow passage.
(5) The work machine according to any one of modes (2) to (4), wherein the air discharged from the first flow passage flows toward the flow of air discharged from the second flow passage.
(6) The work machine according to any one of modes (2) to (5), wherein a lower surface portion constituting a lower surface of the first flow passage is disposed below the partition plate with an upward tilt toward the vent hole.
(7) The work machine according to any one of modes (1) to (6), wherein a tilt angle of the partition plate is variable.
(8) The work machine according to mode (7), wherein the partition plate is pivotably disposed on a support portion defining a sidewall of the exhaust flow passage, and the partition plate includes a fixing portion that fixes a tilt of the partition plate relative to the support portion.

### REFERENCE SIGNS LIST

1 excavator (work machine)
2 traveling vehicle body
5 traveling part
7 swivel frame
10 operator's cab
11 engine room
12 engine
14 right cover (exterior cover)
20A lower traveling body
20B upper swiveling body
52 hydraulic oil tank
54 battery
55 battery cover
60 heat exchange unit (heat exchanger)
61 radiator (heat exchanger)
62 oil cooler (heat exchanger)
65 cooling fan
68 fan shroud
69 support plate (support portion)
72a opening (vent hole)
72b opening (vent hole)
73 slit (vent hole)
74 grille
80 exhaust duct (exhaust flow passage)
81 upper plate portion
82 front-side plate portion (support portion)
83 lower plate portion (lower surface portion)
86 movable plate portion
91 partition plate
92c engaging projection (fixing portion)
93 first flow passage
94 second flow passage

## Claims

1. A work machine including an exterior cover having a vent hole communicating with an engine room, the work machine comprising:
an exhaust flow passage of air disposed between a heat exchanger disposed at a position opposing the vent hole and the exterior cover having the vent hole, and
a partition plate dividing the exhaust flow passage into an upper portion and a lower portion and disposed in the exhaust flow passage, the partition plate tilting upward from inside of the engine room toward the vent hole.

2. The work machine according to claim 1, wherein the partition plate divides the exhaust flow passage into a first flow passage and a second flow passage, the first flow passage being disposed on a lower side of the partition plate and having a flow passage cross-sectional area that increases from the inside of the engine room toward the vent hole, the second flow passage being disposed on an upper side of the partition plate and having a flow passage cross-sectional area that decreases from the inside of the engine room toward the vent hole.

3. The work machine according to claim 2, wherein the flow passage cross-sectional area of the first flow passage on a side of the heat exchanger is larger than the flow passage cross-sectional area of the second flow passage on the side of the heat exchanger.

4. The work machine according to claim 3, wherein a flow of air discharged from the second flow passage is faster than a flow of air discharged from the first flow passage.

5. The work machine according to claim 4, wherein the air discharged from the first flow passage flows toward the flow of air discharged from the second flow passage.

6. The work machine according to claim 2, wherein a lower surface portion constituting a lower surface of the first flow passage is disposed below the partition plate with an upward tilt toward the vent hole.

7. The work machine according to any one of claims 1 to 6, wherein a tilt angle of the partition plate is variable.

8. The work machine according to claim 7, wherein the partition plate is pivotably disposed on a support portion defining a sidewall of the exhaust flow passage, and the partition plate includes a fixing portion that fixes a tilt of the partition plate relative to the support portion.

9. The work machine according to claim 1, wherein a hydraulic oil tank is disposed on a side of the exhaust flow passage, and the exhaust flow passage is disposed apart from the hydraulic oil tank.

10. The work machine according to claim 9, wherein,
a side surface portion of the exhaust flow passage faces the hydraulic oil tank, and
the partition plate is formed along the side surface portion.

11. A work machine including an exterior cover having a vent hole communicating with an engine room, wherein air is discharged from inside a work machine body through the vent hole divided into an upper portion and a lower portion.

12. The work machine according to claim 11, wherein the vent hole includes an upper opening in an upper portion and a lower opening in a lower portion, and
an area of the upper opening is smaller than an area of the lower opening.

13. The work machine comprising:
an exhaust flow passage communicating with the vent hole; and
a partition plate dividing the exhaust flow passage into an upper portion and a lower portion.

14. The work machine according to claim 13, wherein the partition plate tilts upward toward the vent hole.

15. The work machine according to claim 14, wherein the exhaust flow passage includes a first flow passage and a second flow passage, the first flow passage communicating with the lower opening and having an upper surface being the partition plate, the second flow passage communicating with the upper opening and having a lower surface being the partition plate.
